(19) Europäisches Patentamt
European Patent Office
Office européen des brevets

(11) **EP 1 953 986 A2**

(12) **EUROPEAN PATENT APPLICATION**

(43) Date of publication:
**06.08.2008 Bulletin 2008/32**

(51) Int Cl.:
**H04L 27/26** *(2006.01)*

(21) Application number: **08100093.7**

(22) Date of filing: **04.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **31.01.2007 JP 2007020903**

(71) Applicant: **FUJITSU LIMITED**
**Kawasaki-shi,**
**Kanagawa 211-8588 (JP)**

(72) Inventors:
• **Nakaya, Yuuta**
**FUJITSU LIMITED**
**Kawasaki-shi, Kanagawa 211-8588 (JP)**

• **Nakamura, Michiharu**
**FUJITSU LIMITED**
**Kawasaki-shi, Kanagawa 211-8588 (JP)**
• **Kobayashi, Kazuhiko**
**FUJITSU LIMITED**
**Kawasaki-shi, Kanagawa 211-8588 (JP)**

(74) Representative: **Stebbing, Timothy Charles**
**Haseltine Lake**
**5th Floor Lincoln House**
**300 High Holborn**
**London, WC1V 7JH (GB)**

(54) **Multicarrier modulation with adaptation to the noise environment**

(57)    A noise judgment unit (65) of a mobile terminal (60) judges whether there is a factor for poor reception such as 1/f noise in a receiving unit of the mobile terminal based upon the output of an FFT unit (62), and notifies a base station (30) of that measurement result. When the mobile terminal (60) is affected by 1/f noise, the base station (30) transmits a signal to that mobile station by an OFDM method without using subcar r i ers at which 1/f noise occurs.

# FIG. 1

## Description

This invention relates to a communication system and communication method, and more particularly to a communication system and communication method that uses subcarriers to transmit data from a transmitter to a receiver.

Generally, in radio communication, a signal that is transmitted from the transmitting side and received by the receiving side receives various external disturbances (noise) before it is restored to the original transm i ss i on signal. These external disturbances may be interference that mixes with the signal in the communication path, or may be distortions or noise that are generated inside the transmitter or receiver. Of the noise that is generated inside the receiver, 1/f noise (flicker noise) is noise whose size is proportional to 1/f (where f is the frequency), and has a large effect on communication signals in low frequency bands. This 1/f noise particularly occurs in a receiver that uses lower power-consumption devices such as a CMOS device. In an OFDM system that uses terrestrial digital television broadcasting standards, the interval between subcarriers is on the order of 1kHz, so low-frequency subcarriers easily receive adverse effects due to 1/f noise.

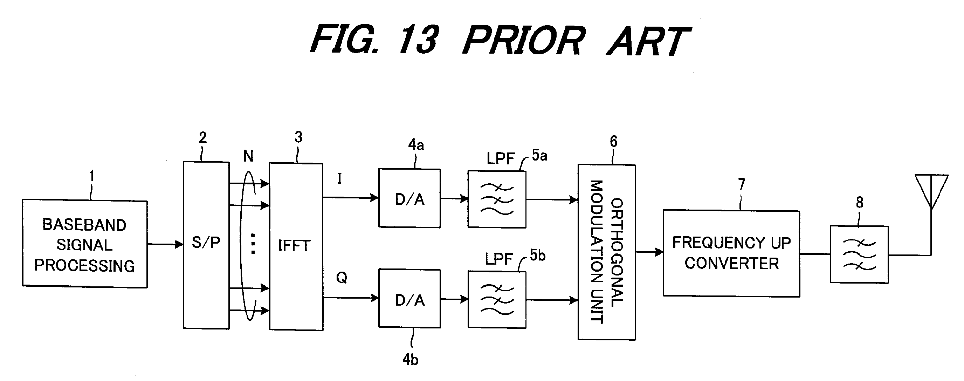

FIG. 13 shows an example of the construction of an OFDM (Orthogonal Frequency Division Multiplex) transmitter. A baseband signal processing unit 1 executes baseband signal processing such as addition of an error correction/detection code to the signal to be transmitted, interleaving, multi-value modulation and the like. A serial-parallel converter (S/P converter) 2 converts the processed result (transmission data) from the baseband signal processing unit 1 to N parallel complex components, and an IFFT (Inverse Fast Fourier Transformer) unit 3 performs IFFT processing on the N complex components as N subcarrier components $f_0$ to $f_{N-1}$, then converts the result to a real number discrete time signal I(t) and an imaginary number discrete time signal Q(t), and outputs the two signals.

Each of the subcarriers of the IFFT unit 3 is a complex sine wave whose frequency is based on a reference frequency (= fs/N) that is 1/N of the FFT sampling frequency fs, and is an integer multiple (1 to N) of that reference frequency. Here, N is the size of the FFT (Fast Fourier Transform). FIG. 14 is a drawing explaining the subcarriers, where N subcarriers having frequencies fs/2 to -fs/2 that are centered around a direct current portion (DC component) $f_0$ are used. By summing up all of the complex sine wave signals that are generated at these N subcarriers, the IFFT unit 3 outputs a real number discrete time signal I(t) and imaginary number discrete time signal Q(t).

Digital-to-analog converters (D/A) 4a, 4b perform digital to analog conversion of the discrete time signals I(t), Q(t) to convert them to analog electrical signals. Due to the nature of I FFT process i ng and DA conversion, many harmonic components are included in the analog baseband signals that are obtained from the processing described above. Therefore, low-pass filters (LPF) 5a, 5b restrict the frequency band, and extract an analog baseband signal having a desired bandwidth, then input the results to an orthogonal modulation unit 6. The orthogonal modulation unit 6 performs orthogonal modulation by respectively multiplying the real number portion I (t) and imaginary number portion Q(t) by a sine wave and cosine wave that have an intermediate frequency and that are generated from a local oscillator (not shown in the figure), then a frequency-UP converter 7 converts the frequency to an RF frequency, and a bandpass filter (BPF) 8 removes the unnecessary signal components that occur during analog MIX (orthogonal modulation and frequency conversion) such as an image component and spurious component, after which the signal passes through a high-frequency amplifier (not shown in the figure) and is transmitted from an antenna.

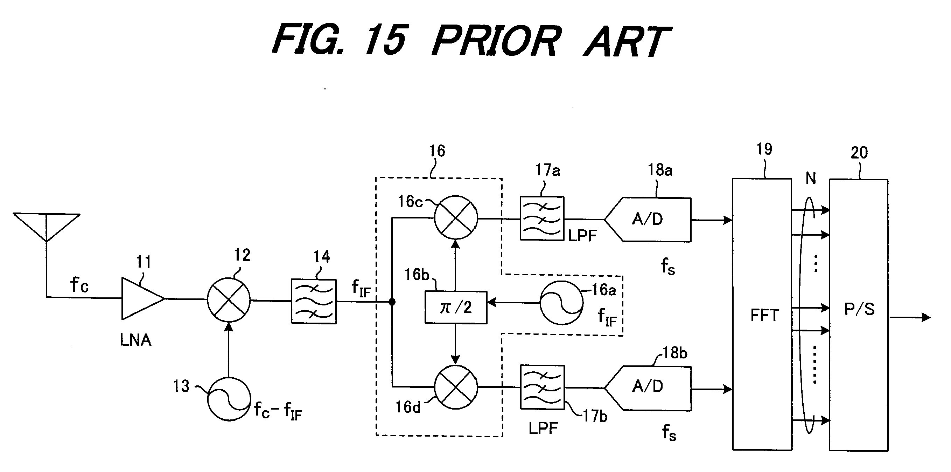

FIG. 15 shows an example of an OFDM receiver of heterodyne reception construction. A low-noise amplifier 11 amplifies the RF signal having frequency $f_c$ that was received by the antenna, and a m i xer 12 mixes a local signal (local oscillator signal) that is generated from a local oscillator 13 and having a frequency $(f_c-f_{IF})$ with the RF signal to generate a signal hav i ng an i ntermed i ate frequency $f_{IF}$, then an IF filter 14 lets the signal component of the intermediate frequency band pass through and inputs it to an orthogonal demodulation unit 16. In the orthogonal demodulation un i t 16, a local oscillator 16a generates a local signal having a frequency that is the same as the intermediate frequency $f_{IF}$, a phase shifter 16b inputs a local cosine wave and sine wave whose phases differ by 90° into multipliers (mixers) 16c, 16d, then the mixers 16c, 16d multiply the signal having the intermediate frequency by the cosine wave and sine wave to demodulate the baseband complex signals (real number portion, imaginary number portion), and inputs the result to low-pass filters 17a, 17b. The low-pass filters 17a, 17b basically let the baseband signals (main signals) pass, and inputs them to AD converters 18a, 18b. The AD converters 18a, 18b sample the components of the baseband complex signals with the frequency fs, and convert the signals to digital signals, then input the results to an N-sized FFT unit 19. The FFT unit 19 performs FFT processing on the N complex signals, and outputs N subcarrier signal components, then a P/S converter 20 converts the N subcar r i er signal components to serial complex data and inputs the result to a baseband processing unit (not shown in the figure).

An OFDM receiver having the heterodyne reception construction described above is greatly affected by 1/f noise in the low-frequency subcarriers (subcarrier components close to direct current (DC). In other words, in the case of a modulation signal that is divided into bands like an OFDM signal and that uses a plurality of narrow-band subcarr i ers, there is a problem in that subcarriers that are close to DC are greatly affected by 1/f noise, which results in extreme degradation of the quality of communication.

Therefore, in order to avo i d the degradat i on of commun i cat i on quality due to the effects of 1/f noise, there is a method of reception using low-IF. This low-IF reception method avoids the effects due to 1/f noise by performing AD conversion of the signal having an intermediate frequency $f_{IF}$, and then performing digital orthogonal demodulation. However, compared to the zero-IF reception method shown in FIG. 15, this low-IF reception method requires an AD converter which needs double the sampling speed, so there is a problem in that power consumption increases.

Also, construction of a mixer having CMOS configuration that reduces the 1/f noise has been proposed (see Japanese patent application JP2007-6493A). However, this prior art does not eliminate the 1/f noise systematically, and the amount of the 1/f noise which can be reduced is limited.

It is therefore desirable to eliminate the effect of 1/f noise.

Embodiments of the present invention can eliminate the effect of 1/f noise by transmitting a signal to a mobile terminal that is affected by 1/f noise without using subcarriers having a frequency near direct current.

■ Communication Method

A first form of the invention is a communication method that uses subcarriers to transmit data from a transmitter to a receiver.

A first communication method comprises: a step in which the receiver notifies the transmitter before data communication that a factor for poor reception exists in the receiver at specified frequencies; and a step in which the transmitter uses subcarriers other than the subcarriers for the frequencies at which the factor for poor reception exists to transmit data to the receiver. The factor for poor reception, is 1/f noise, for example, that is generated at subcarriers for frequencies near direct current (DC).

The communication method described above further comprises a step in which the transmitter uses all of the subcar r i ers except for the subcar r i ers of said notified frequencies to transmit data to the receiver in the case where the transmitter transmits data to the receiver by an OFDM method.

The communication method described above further comprises a step of discriminating whether there exists a factor for poor reception in the receiver at specified frequencies.

The communication method described above further comprises a step of increasing the transmission power by the amount of power of unused subcar r i ers when the transmitter transmits data to the receiver by an OFDM method.

The communication method described above further comprises: a step in which the transmitter notifies the receiver of subcarriers used for OFDM transmission, when the transmitter uses subcarriers to transmit data to the receiver by a OFDM method; and a step in which the receiver uses the notified subcarriers to perform OFDM modulation of a received signal.

A second communication method comprises: a step in which the receiver notifies the transmitter before data communication that a factor for poor reception exists in the receiver at specified frequencies; and a step in which the transmitter increases the transmission power of the subcarriers for the notified frequencies at which a factor for poor reception exists greater than the transmission power of the other subcarriers.

■ Communication System

A second form of the invention is a communication system that uses subcarriers to transmit data from a transmitter to a receiver.

In a first communication system, to receiver comprises: a judgment unit that discriminates whether there is a factor for poor reception at specified frequencies in the receiver; and a notification unit that notifies the transmitter before data communication that a factor for poor communication exists at specified frequencies; and the transmitter compr i ses: a recept i on holding un i t that rece i ves and holds the i nformat i on that is transmitted from the receiver; and a transmission unit that performs OFDM transmission of data to the receiver using subcarriers other than subcarriers for the notified frequencies at which a factor for poor reception exists. The transmitter further comprises a transmission power control unit that increases the transmission power by the amount of power of unused subcarriers.

In a second communication system, the receiver comprises: a judgment unit that judges whether there is a factor for poor reception in the receiver at specified frequencies; and a notification unit that notifies the transmitter before data communication that there is a factor for poor reception at specified frequencies; and the transmitter comprises: a reception holding unit that receives and holds the information that is transmitted from the receiver; and a transmission power control unit that increases the transmission power of the subcarriers for the notified frequencies at which the factor for poor reception exists greater than the transmission power of the other subcarriers.

With this invention, when a factor for poor reception exists in the receiver at specified frequencies, the receiver notifies the transmitter of that fact before data communication, and the transmitter uses subcarriers other than the subcarriers for the notified frequencies at which the factor for poor reception exists to transmit data to the receiver, so the BER (Bit Error Rate) is prevented from becoming large.

Also, with this invention, the transmitter does not use subcarriers near direct current (DC) to transmit data to the receiver when 1/f noise is generated, so it is possible to eliminate the effect of 1/f noise.

Moreover, with this invention, when the transmitter uses subcarriers to transmit data to the receiver by an OFDM method, the transmission power can be increased by the amount of power of the unused subcarriers, so the BER (Bit Error Rate) can be reduced.

Also, with this invention, the transmission power of subcarriers for the notified frequencies at which there is a factor for poor reception may be increased to be greater than that of the other subcarriers, so the effect of 1/f noise can be eliminated.

Furthermore, preferably, when a transmitter uses subcarriers other than the subcarriers for frequencies at which there is a factor for poor reception to transmit data to a receiver, the transmitter notifies the receiver of the subcarriers used for OFDM transmission, and the receiver uses the notified subcarriers to perform OFDM demodulation of the received signal, so the receiver can receive and demodulate a signal using subcarriers other than subcarriers for frequencies at which there is a factor for poor reception.

Other features and advantages of the present invention will be apparent from the following description taken in conjunction with the accompanying drawings, in which:

FIG. 1 is a drawing explaining an overview of the invention.
FIG. 2 is a drawing showing the construction of a mobile terminal of a first embodiment of the present invention.
FIG. 3 is a drawing showing the construction of a noise judgment unit.
FIG. 4 is a drawing showing the construction of a base station of a first embodiment of the invention.
FIG. 5 is a drawing showing the BER-SNR characteristics for explaining the effect of a first embodiment of the invention.
FIG. 6 is a drawing showing the construction of a first variation of a base station that performs transmission power control.
FIG. 7 is a drawing showing the construction of a second variation of a base station that performs transmission power control.
FIG. 8 is a drawing explaining an access method that performs multiplexed transmission of user data by dividing a bandwidth into a plurality of bands and assigning the respective bands to a plurality of users.
FIG. 9 is a drawing showing the construction of a mobile station of a second embodiment of the invention.
FIG. 10 is a drawing showing the construction of a base station that performs multiplexed transmission of user data by dividing a bandwidth into a plurality of bands.
FIG. 11 is a drawing explaining frame format.
FIG. 12 is a drawing showing the construction of an OFDM transmission unit.
FIG. 13 is a drawing showing an example of the construction of an OFDM transmitter.

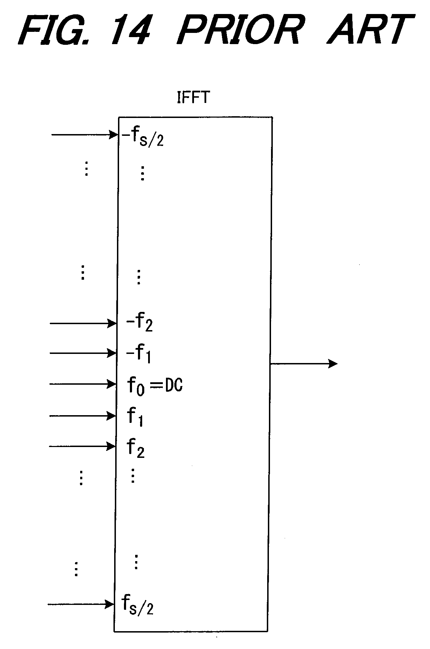

FIG. 14 is a drawing explaining subcarriers.

FIG. 15 is a drawing showing an example of the construction of an OFDM receiver that comprises heterodyne reception construction.

(A) Overview of the Invention

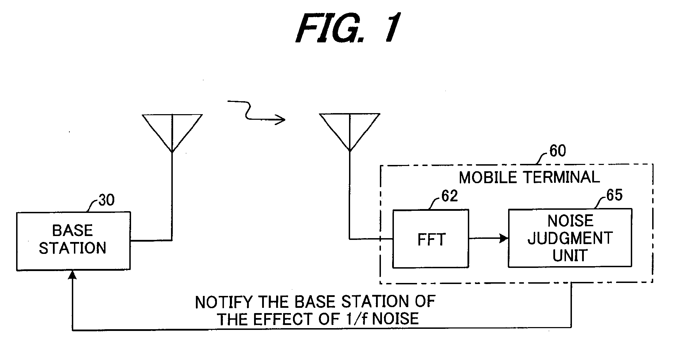

FIG. 1 is a drawing explaining an overview of the invention, where a base station 30 performs radio transmission of a signal to a mobile terminal by OFDM, and the mobile terminal demodulates that OFDM signal. A noise judgment unit 65 in the mobile terminal 60 judges based upon the output of a FFT unit 62 whether there is 1/f noise in the reception unit of the mobile terminal 60, and notifies the base station 30 of the judgment result by a rad i o signal. When the mobile terminal 60 is affected by 1/f noise, the base station 30 performs OFDM transmission of signals to that mobile terminal without using low-frequency subcarriers.

(B) First Embodiment

(a) Mobile Terminal

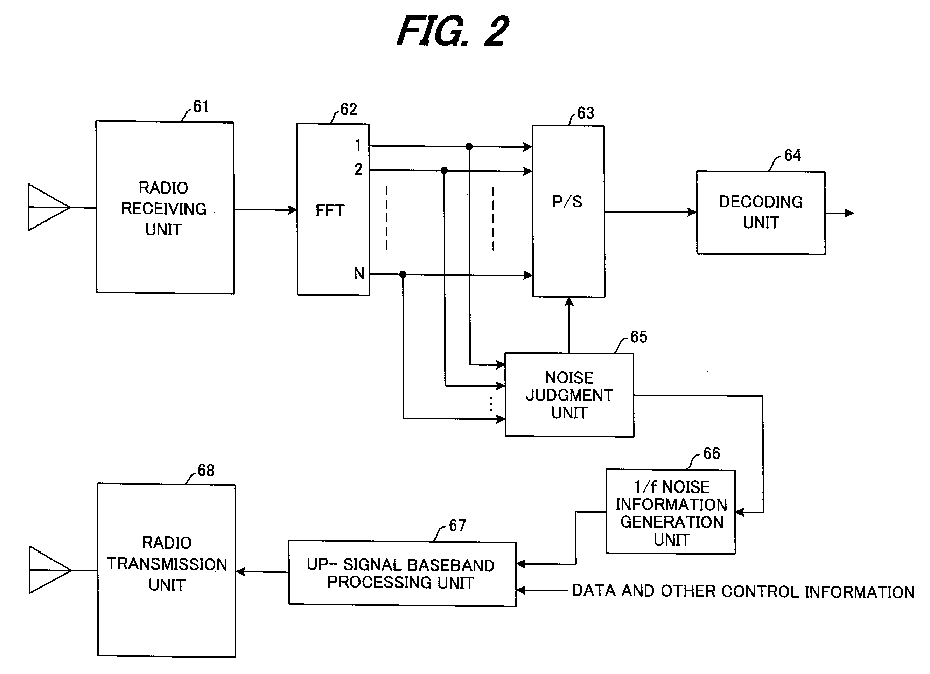

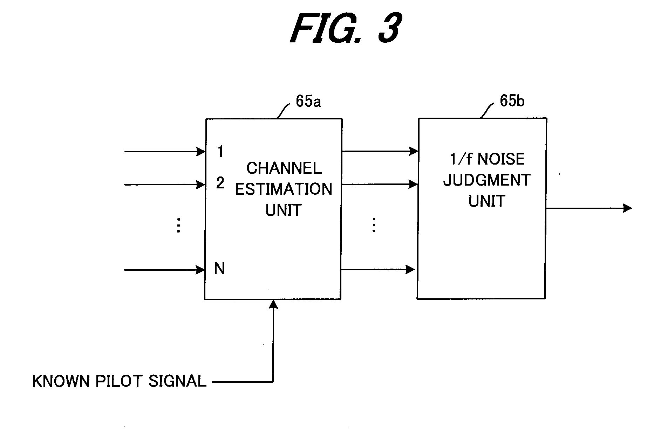

FIG. 2 is a drawing showing the construction of a mobile terminal of a first embodiment of the invention. The receiving side of the mobile terminal comprises OFDM reception construction. However, the transmitting side is not limited to OFDM transmission, and in the figure the transmission method is not specified. The noise judgment unit 65 judges beforehand whether there is 1/f noise on the receiving side, and notifies the base station 30 of the judgment result. For example, a known signal (pilot signal) having a channel attenuation amount of zero for all OFDM subcarriers is input to the radio receiving unit 61. The radio receiving unit 61 comprises the construction shown in FIG. 15 (from the low-noise amplifier 11 to the AD converters 18a to 18b), and it performs AD conversion of a heterodyne demodulation signal and inputs the result to the FFT unit 62. The FFT unit 62 performs FFT processing on the N number of sampled complex signals, and outputs N subcarrier signal components.
As shown in FIG. 3, the noise judgment unit 65 comprises a channel estimation unit 65a and 1/f noise judgment unit 65b. The channel estimation unit 65a uses the subcarriers signals that are output from the FFT unit 62 and the known pilot signal to est i mate the respective channels, and based on the channel estimation result, the 1/f noise judgment unit 65b judges the degree of attenuation in the low-frequency subcarriers (subcarriers near direct current (DC)), and determines that there is 1/f noise when the channel attenuation in subcarriers near DC is large, and determines that there is no 1/f noise when the channel attenuation in subcarriers near DC is small, then saves the judgment result in a 1/f information generation unit 66.

After a communication link is established before starting communication, the up-signal baseband processing unit 67 of the mobile terminal acquires the 1/f no i se information from the 1/f no i se information generation unit 66, and transmits that information to the base station via the radio transmission unit 68. Based on the 1/f noise information received for the mobile terminal, the base station determines whether or not the mobile terminal is affected by 1/f noise.

During data communication, when the mobile terminal is not affected by 1/f noise, the base station performs OFDM transmission processing of the transmission signal to the mobile terminal using all of the N subcarriers, however, when the mobile terminal is affected by 1/f noise, the base station performs OFDM transmission processing of the transmission signal to the mobile station using the M subcarriers (M < N) after excluding the subcarriers near DC.

The FFT unit 62 of the mobile terminal performs FFT processing on the N sample signals that are input from the radio receiving unit 61 to generate N subcarrier signals, and inputs the result to the P/S conversion unit (parallel to serial conversion unit) 63. When the mobile terminal is not affected by 1/f noise, the P/S conversion unit 63 performs parallel to serial conversion of all of the N subcarrier signals, and inputs the result to a decoding unit 64. On the other hand, when the mobile terminal is affected by 1/f noise, the P/S conversion unit 63 performs parallel to serial conversion on the M (M < N) subcarriers after excluding the subcarriers near DC, and inputs the result to the decoding unit 64. The decoding unit 64 uses the input serial data to perform an error correction and decoding process, and outputs the processing result.

In the description above, a noise judgment unit 65 is used to detect whether or not there is 1/f noise, however, construction is possible in which the noise judgment unit 65 is not used, but rather a 1/f measurement device measures beforehand whether or not there is 1/f noise, and sets the measurement result in the 1/f noise information generation unit 66. Also, depending on whether or not the receiver is constructed using CMOS, or in other words, when the receiver is constructed using CMOS, it can be determined that there is 1/f noise, and when the receiver is not constructed using CMOS, it can be determined that there is no 1/f noise.

(b) Base Station Construction

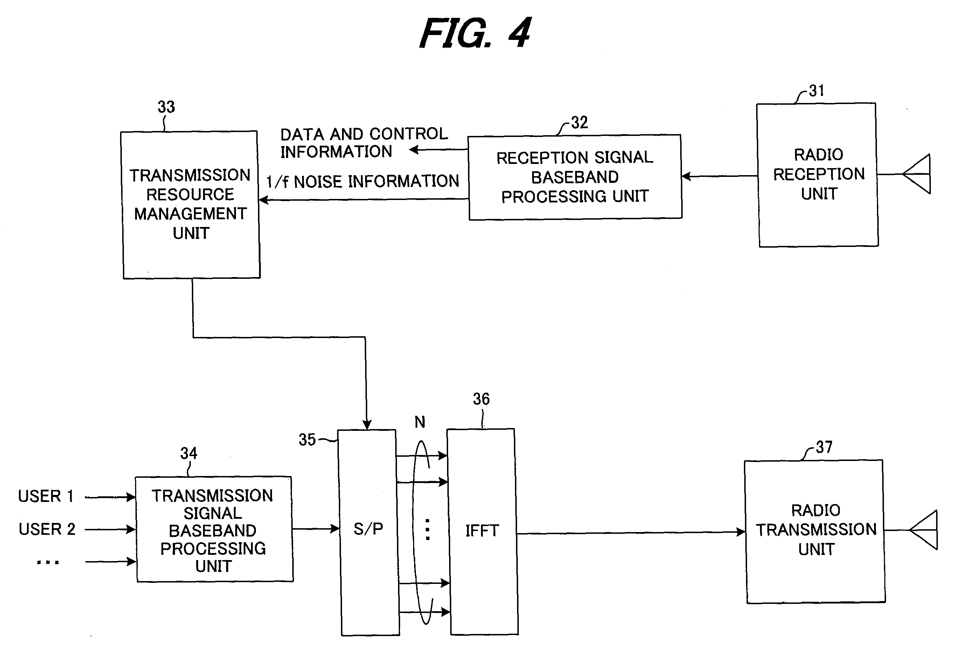

FIG. 4 is a drawing showing the construction of a base station of a first embodiment of the invention.

A radio receiving unit 31 receives up-signals (signals on an uplink) from each of the mobile terminals, then a reception signal baseband process i ng un i t 32 separates the up-data, control information and 1/f no i se information, and inputs the 1/f noise information to a transmission resource management unit 33.

The transmission resource management unit 33 saves the 1/f noise information from each mobile terminal, and when performing transmission to that mobile terminal, controls whether or not to use the subcarriers near DC. For example, when the base station performs OFDM transmission processing of transmission data to all of the users using time division multiplexing, a transmission signal baseband processing unit 34 executes baseband signal processing such as the addition of error correction/ detection code, multi-value modulation, and the like in order for all of the user data, and inputs the processing results to the serial-to-parallel converter (S/P conversion unit) 35. At the same time, based on the 1/f noise information from each mobile terminal, the transmission resource management unit 33 inputs a signal which indicates whether to use or not use subcarriers near DC to the S/P conversion unit 35.

When it is possible to use subcarriers near DC, the S/P conversion unit 35 converts the serial user data to N parallel data, and inputs N subcarrier signal components to the N input terminals of the IFFT unit 36. On the other hand, when it is not possible to use subcarriers near DC, the S/P conversion unit 35 converts the serial user data to M (M < N) items of parallel data, and inputs the M subcarrier signal components (subcarriers other than those near DC) to the M input terminals of the IFFT unit 36. The S/P conversion unit 35 inputs '0' to the terminals for subcarriers near DC. The IFFT unit 36 performs IFFT process on the N subcarrier signal components to convert them to a time domain signal, and a radio transmission unit 37 transmits the OFDM signal to the mobile terminal.

From the above, when it is possible to use subcarriers near DC, transmission is performed using all N subcarriers, however, when it is not possible to use subcarriers near DC, transmission is performed using the M (M < N) subcarriers after excluding the subcarriers near DC.

(c) Effect

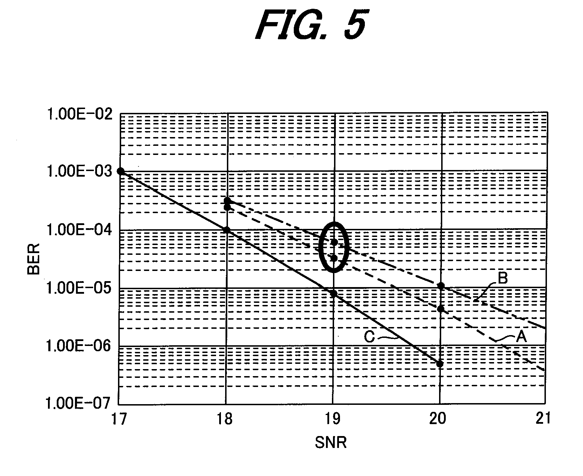

FIG. 5 is a drawing show i ng the BER-SNR characteristics for explaining the effect of this first embodiment of the invention, where A indicates the characteristics of this first embodiment, or in other words, indicates the BER (Bit Error Rate) for the case when there is 1/f noise and transmission is performed avoiding the subcarriers having the worst SNR, B indicates the BER for the case when channel control is not performed in the case where there is 1/f noise, and C indicates the BER for the ideal state.

The throughput for OFDM according to IEEE802. 16 can be considered as an example. In the case of PUSC, 24 subcarriers make up one unit, however, the relative throughput when one of those subcarriers is not used due to the channel control of this invention will be calculated.

The bit error rate BER when SNR = 19 dB is 0.0003 for characteristics A of this invention, and 0. 0006 for character i st i cs B. In this case, tak i ng 1000 bits to be one packet, the throughput for characteristics B is given by the following equation. Here it is regarded that one packet has arrived completely when all 1000 bits have been property transm i tted and rece i ved, and that probability is defined as the throughput.

$$(1 - 0.0006)^{1000} = 0.5487$$

On the other hand, the throughput for characteristics A of this invention is as follows.

$$(23/24)(1 - 0.0003)^{1000} = 0.7099$$

Here, (23/24) is considered to be the coefficient for transmission when avoiding one subcarrier out of 24 subcarriers. From this result, it can be seen that compared with the prior method, the method of this first embodiment has good characteristics from the aspect of throughput.

(d) First Variation

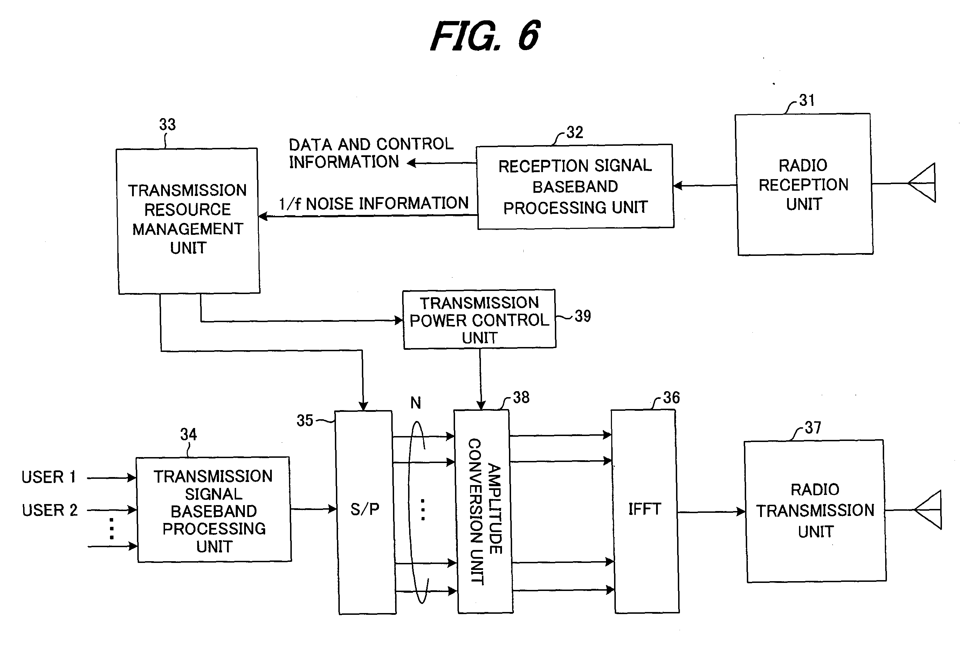

In the first embodiment, each of the carrier signals is transmitted at the same power regardless of whether or not subcarriers near direct current (DC) are used. However, when subcarriers near DC are not used, the transmission power for other subcarriers can be increased by the amount of power cor respond i ng to the number of subcarriers that are not used. FIG. 6 shows the construction of a base station that performs this kind of transmission power control, and differs from the construction of the first embodiment shown in FIG. 4 in that it has an amplitude conversion unit 38 and transmission power control unit 39.

When transmitting a signal using all N subcarriers, the amplitude conversion unit 38 does not perform amplitude conversion on the subcarrier signal components that are input from the S/P conversion unit 35, but inputs them to the IFFT unit 36 as they are. The IFFT unit 36 performs IFFT processing on the subcarrier signal components to convert them to a time domain signal, and inputs that signal to the radio transmission unit 37.

On the other hand, when subcarriers near DC are not used, the transmission power control unit 39 instructs the amplitude conversion unit 38 to perform amplitude conversion. By do i ng so, the amplitude conversion un i t 38 increases the amplitude of all of the subcarr i er signal components that were input from the S/P conversion unit 35, except for the subcarriers near DC, a specified amount. For example, when the total number of subcarriers is taken to be N, and the number of subcarriers near DC is taken to be n, then the amplitude conversion unit 38 increases the amplitude of the subcarr i er signal components except the subcarriers near DC by n/(N-n), then the IFFT unit 36 performs IFFT processing on the subcarrier signal components to convert them to a time domain signal, and inputs that signal to the radio transmission unit 37.

As was described above, with this first variation, when subcarriers near DC are not used, the transmission power of the other subcarriers is increased by the amount of power that corresponds to the number of subcarriers that are not used, so it is possible to reduce the BER (Bit Error Rate).

(e) Second Variation

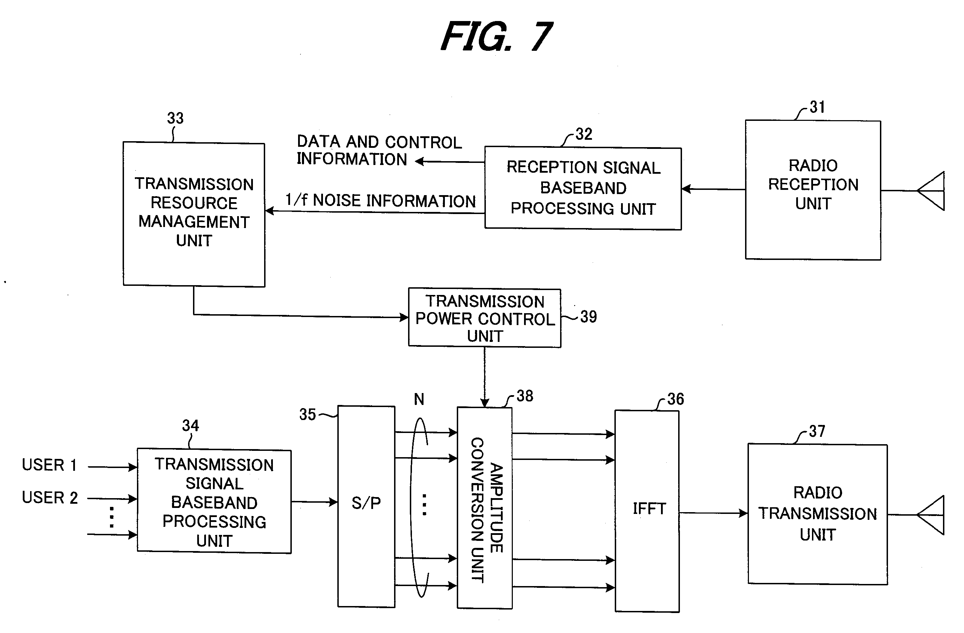

In the first embodiment, the case of performing OFDM transmission without using subcarriers near DC when there is 1/f noise was explained. However, even when there is 1/f no i se, it is possible to use all subcarriers. However, in this case, by giving the subcarriers near DC more power than other subcarriers, the BER (Bit Error Rate) is reduced. FIG. 7 shows the construct i on of a base stat i on of a second var i at i on, and this construction differs from the first embodiment shown in FIG. 4 in that there is an amplitude conversion unit 38 and transmission power control unit 39.

When there is no 1/f noise, the amplitude conversion unit 38 does not perform amplitude conversion on all N subcarrier signal components that are input from the S/P conversion unit 35, but inputs those subcarrier signal components as they are to the IFFT un i t 36. The IFFT un i t 36 performs IFFT processing on the subcarrier signal components to convert them to a time domain signal, and inputs that signal to the radio transmission unit 37.

On the other hand, when there is 1/f noise, the transmission power control unit 39 instructs the amplitude conversion unit 38 to perform amplitude conversion. By doing so, of the subcarrier signal components that are input from the S/P conversion unit 35, the amplitude conversion unit 38 increases the power of the n subcarrier components near DC by a specified amount. The IFFT unit 36 performs IFFT processing on the subcarrier signal components to convert them to a time domain signal, and inputs that signal to the radio transmission unit 37.

As descr i bed above, w i th this second var i at i on, when there is 1/f no i se, the BER (Bit Error Rate) is reduced by assigning more power to the subcarriers near DC than to the other subcarriers.

(C) Second Embodiment

(a) Dividing the Bandwidth into Bands

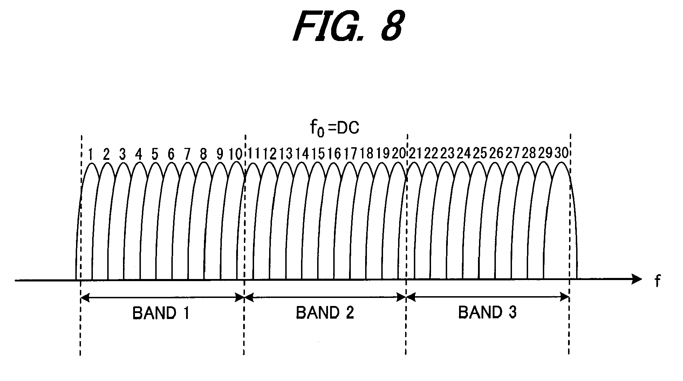

In the first embodiment, the case was explained in which the base station performed time division multiplexing to transmit OFDM signals to all of the users, however, it is also possible to perform transmission using frequency division multiplexing. FIG. 8 is a drawing explaining an access method called OFDMA (Orthogonal Frequency Division Multiple Access) in which user data is multiplexed and transmitted by dividing the available bandwidth into a plurality of bands and assigning the respective bands to a plurality of users; for example, FIG.

8 shows an example in which a bandwidth comprising 30 subcarriers is divided into three bands of 10 subcarriers each, and each band is assigned to a different user (mobile terminal). Subcarrier No. 15 in the second band is a direct current subcarrier (DC component) having frequency f0.

(b) Mobile Station

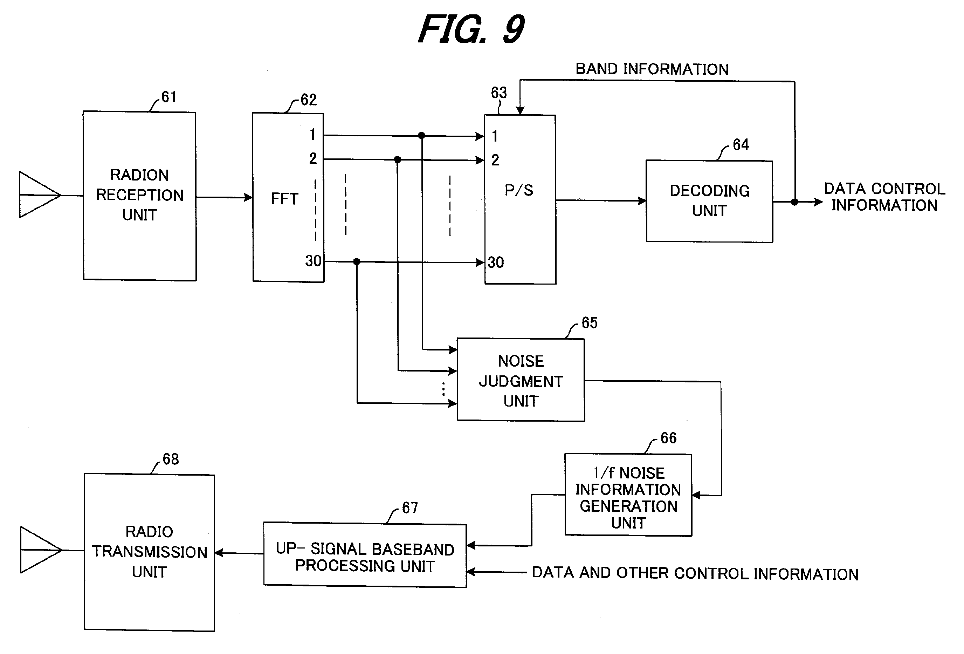

FIG. 9 shows the construction of a mobile station of a second embodiment of the invention, where the same reference numbers are given to parts that are the same as those of the first embodiment shown in FIG. 2. This embodiment differs in that: (1) after a communication link is established, a decoding unit 64 decodes band assignment information that is notified from the base station, and inputs that assigned band to a P/S conversion unit 63 ; and (2) during data communication, the P/S conversion unit 63 performs parallel to serial conversion of the subcarrier signals that belong to the assigned band, and inputs the result to the decoding unit 64.

(c) Base Station

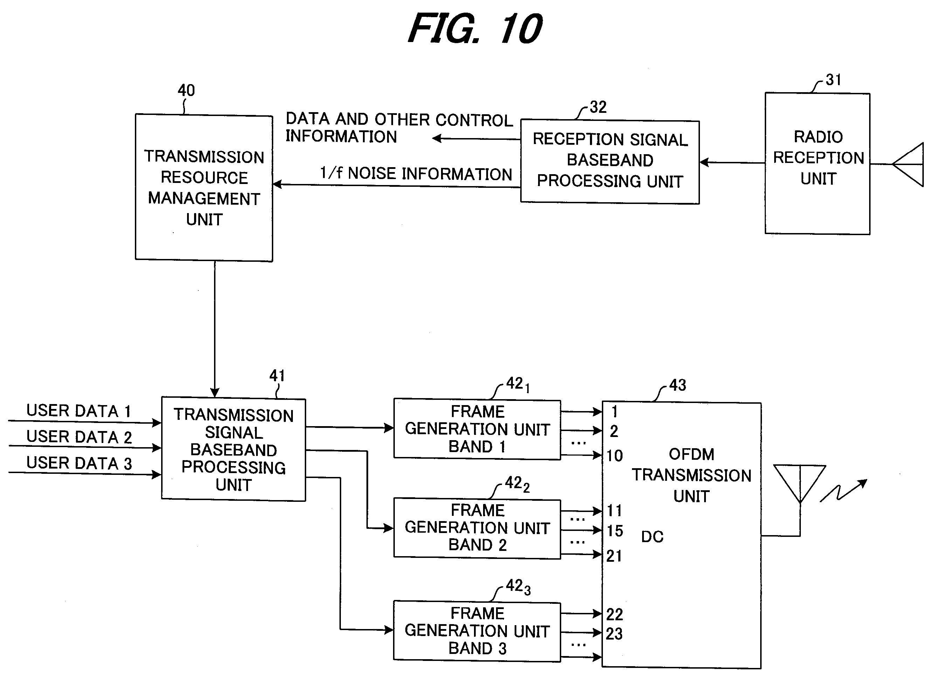

FIG. 10 shows the construction of a base station of this second embodiment that performs multiplexed transmission of user data by dividing a bandwidth into a plurality of bands. After a communication link is established before starting communication, the up-signal baseband processing unit 67 of the mobile terminal (see FIG. 9) acquires 1/f noise information from the 1/f noise information generation unit 66, and transmits that information to the base station via the radio transmission unit 68. The radio receiving unit 31 of the base station receives radio signals from all of the mobile terminals, and performs frequency-down conversion of the baseband signals and inputs the result to the reception signal baseband processing unit 32. The reception signal baseband processing unit 32 separates the UP data, control information and 1/f noise information, and inputs the 1/f noise information from each mobile terminal to the transmission resource management unit 40.

Based on the 1/f noise information, the transmission resource management unit 40 assigns sub bands for data communication to the mobile terminals (users 1 to 3) and inputs the result to the transmission signal baseband processing unit 41. In other words, the transmission resource management unit 40 makes a reference to the 1/f noise information for a user, and assigns either the first or third sub band to a user that is affected by 1/f noise without assigning the second sub band, and assigns an arbitrary sub band to a user that is not affected by 1/f noise, then inputs the sub band assignment information to the baseband processing unit 41. The baseband processing unit 41 uses a preset subcarrier to notify the mobile terminal of the sub band assignment information. The decoding un i t 64 of the mobile terminal decodes the band ass i gnment information and inputs it to the P/S conversion unit 63.

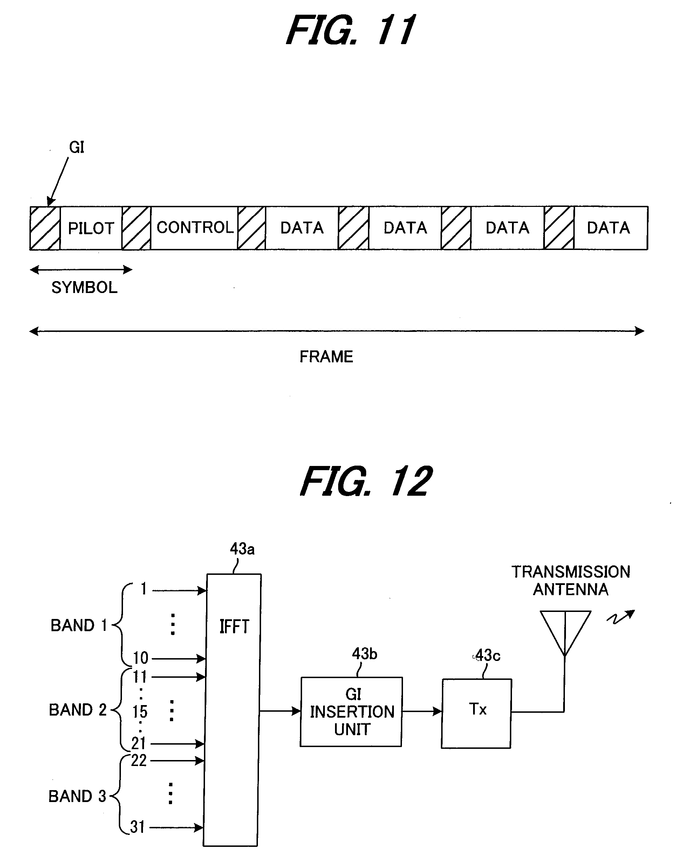

When communication link establishment control is finished, the transmission signal baseband processing unit 41 of the base station performs encoding at a specified encoding rate and data modulation using a modulation method such as BPSK, QPSK, 16QAM or the like for each user data, and distributes the modulation result to the frame generation units $42_1$ to $42_3$ for the bands indicated by the sub band assignment information. Also, a pilot creation unit (not shown in the figure) creates pilots for the patterns according to each band, and inputs those pilots to the respective frame generation units $42_1$ to $42_3$. Each frame generation unit $42_1$ to $42_3$ distributes the pilots, control data and transmission data to specified subcarriers 1 to 10, 11 to 20 or 21 to 30 at timings indicated in the frame format shown in FIG. 11.

The OFDM transmission unit 43 comprises the construction shown in FIG. 12, where a IFFT unit 43a performs IFFT processing on the subcarrier signals 1 to 30 that are input from the frame generation units $42_1$ to $42_3$ to convert them to a time domain signal, a guard interval insertion unit 43b inserts a guard interval into that time domain signal, and a transmission unit 43c converts the frequency of the signal that is output from the guard interval insertion unit 43b to a RF signal, and transmits the result from the transmission antenna.

The FFT un i t 62 of the mobile terminal I (see FIG. 9) performs FFT process i ng on the N sample components (in the figure N = 30) that are input from the radio receiving unit 61 to generate 30 subcarrier signals, and inputs them to the P/S conversion unit 63. The P/S conversion unit 63 selects the subcarriers signals of the band that is instructed from the decoding unit 64 when performing data communication establishment control, and performs parallel/serial conversion of the sub carrier signals, then inputs the result to the decoding unit 64. The decoding unit 64 uses the input serial data to perform an error correction and decoding process, and outputs the processing result.

In the first embodiment described above, the case of limiting the subcarriers used when performing data communication with a mobile terminal was explained, however, it is also possible to limit the subcarriers used when broadcasting data to a plurality of mobile terminals.

The case of applying the present invention to OFDM transmission was explained, however, the invention is not limited to OFDM communication, and can also be applied to the case of communication using one specified carrier among multiple carriers. Moreover, references to OFDM in the claims are to be taken as covering OFDMA as well.

Moreover, in the explanation above, 1/f noise was explained as the factor for poor reception, however, the invention is not limited to 1/f no i se, and can also be applied in cases of other factors for poor reception.

As many apparently widely different embodiments of the present invention can be made without departing from the scope thereof, it is to be understood that the invention is not limited to the specific embodiments thereof except as defined in the appended claims.

## Claims

1. A communication method of using subcarriers to transmit data from a transmitter to a receiver, comprising:

   a step in which the receiver notifies the transmitter before data communication that a factor for poor reception exists in the receiver at specified frequencies; and
   a step in which the transmitter uses subcarriers other than the subcarriers for the frequencies at which the factor for poor reception exists to transmit data to the receiver.

2. The communication method of claim 1, further comprising
   a step in which the transmitter uses all of the subcarriers except for the subcarriers of said notified frequency to transmit data to the receiver in the case where the transmitter transmits data to the receiver by an OFDM method.

3. The communication method of claim 1 or claim 2 further comprising
   a step of discriminating whether there exists a factor for poor reception in the receiver at specified frequencies.

4. The communication method of claim 3 wherein said factor for poor reception is 1/f noise that is generated in subcarriers having a frequency near direct current.

5. The communication method of claim 2 further comprising
   a step of increasing the transmission power by the amount of power of unused subcarriers when the transmitter transmits data to the receiver by an OFDM method.

6. The communication method of claim 2 or 5 further comprising
   a step in which the receiver performs OFDM demodulation of a received signal using subcarriers except for frequencies at which there exists a factor for poor reception.

7. The communication method of any preceding claim further comprising:

   a step in which the transmitter notifies the receiver of subcarriers used for OFDM transmission, when the transmitter uses subcarriers to transmit data to the receiver by a OFDM method; and
   a step in which the receiver uses the notified subcarriers to perform OFDM modulation of a received signal.

8. A communication method of using subcarriers to transmit data from a transmitter to a receiver, comprising:

   a step in which the receiver notifies the transmitter before data communication that a factor for poor reception exists in the receiver at specified frequencies; and
   a step in which the transmitter increases the transmission power of the subcarriers for the notified frequencies at which a factor for poor reception exists greater than the transmission power of the other subcarriers.

9. A communication system that uses subcarriers to transmit data from a transmitter to a receiver, wherein
   said receiver comprises:

   a judgment unit that judges whether there is a factor for poor reception at specified frequencies in the receiver; and
   a notification unit that notifies the transmitter before data communication that a factor for poor communication exists at specified frequencies; and

   said transmitter comprises:

   a reception holding unit that receives and holds the information that is transmitted from the receiver; and
   a transmission unit that performs OFDM transmission of data to the receiver using subcarriers other than subcarriers for notified frequencies at which a factor for poor reception exists.

10. The communication system of claim 9 wherein said factor for poor reception is 1/f noise that is generated in subcarriers for frequencies near direct current.

11. The communication system of claim 9 or 10 wherein said transmitter further comprises
   a transmission power control unit that increases the transmission power by the amount of power of unused subcarriers.

12. The communication system of claim 9, 10, or 11 wherein
   said receiver further comprises
   a demodulation unit that performs OFDM demodulation of a received signal using subcarriers except for frequencies at which there exists a factor for poor reception occurs.

13. The communication system of any of claims 9 to 12 wherein
said transmitter further comprises
a notification unit that notifies the receiver of the subcarriers that will be used for OFDM transmission; and
said receiver further comprises
a demodulation unit that demodulates a received signal using said notified subcarriers.

14. A communication system that uses subcarriers to transmit data from a transmitter to a receiver, wherein
said receiver comprises:

> a judgment unit that judges whether there is a factor for poor reception in the receiver at specified frequencies; and
> a notification unit that notifies the transmitter before data communication that there is a factor for poor reception at specified frequencies; and

said transmitter comprises:

> a recept i on holding unit that receives and holds the information that is transmitted from the receiver; and
> a transmission power control unit that increases the transmission power of the subcarriers for the notified frequencies at which the factor for poor reception exists greater than the transmission power of the other subcarriers.

# FIG. 1

MOBILE TERMINAL 60

BASE STATION 30

FFT 62

NOISE JUDGMENT UNIT 65

NOTIFY THE BASE STATION OF
THE EFFECT OF 1/f NOISE

## FIG. 2

EP 1 953 986 A2

# FIG. 3

# FIG. 4

EP 1 953 986 A2

# FIG. 5

# FIG. 6

RADIO
RECEPTION
UNIT
31

RECEPTION SIGNAL
BASEBAND
PROCESSING UNIT
32

DATA AND CONTROL
INFORMATION

1/f NOISE INFORMATION

TRANSMISSION
RESOURCE
MANAGEMENT
UNIT
33

TRANSMISSION
POWER CONTROL
UNIT
39

USER 1
USER 2

TRANSMISSION
SIGNAL
BASEBAND
PROCESSING
UNIT
34

S/P
35

N

AMPLITUDE
CONVERSION UNIT
38

IFFT
36

RADIO
TRANSMISSION
UNIT
37

EP 1 953 986 A2

## FIG. 7

# FIG. 8

# FIG. 9

EP 1 953 986 A2

# FIG. 10

TRANSMISSION RESOURCE MANAGEMENT UNIT (40)

DATA AND OTHER CONTROL INFORMATION

1/f NOISE INFORMATION

RECEPTION SIGNAL BASEBAND PROCESSING UNIT (32)

RADIO RECEPTION UNIT (31)

USER DATA 1
USER DATA 2
USER DATA 3

TRANSMISSION SIGNAL BASEBAND PROCESSING UNIT (41)

FRAME GENERATION UNIT BAND 1 (42₁)
1
2
...
10

FRAME GENERATION UNIT BAND 2 (42₂)
11
...
15
...
21

FRAME GENERATION UNIT BAND 3 (42₃)
22
23
...

OFDM TRANSMISSION UNIT (43)
DC

EP 1 953 986 A2

EP 1 953 986 A2

# FIG. 11

GI

| ▨ | PILOT | ▨ | CONTROL | ▨ | DATA | ▨ | DATA | ▨ | DATA | ▨ | DATA |

SYMBOL

FRAME

# FIG. 12

43a

BAND 1 { 1 ... 10 }
BAND 2 { 11 ... 15 ... 21 }
BAND 3 { 22 ... 31 }

→ IFFT

43b
GI INSERTION UNIT

43c
Tx

TRANSMISSION ANTENNA

20

# FIG. 13 PRIOR ART

# FIG. 14   PRIOR   ART

IFFT

$-f_{s/2}$

$\vdots$

$\vdots$

$-f_2$

$-f_1$

$f_0 = DC$

$f_1$

$f_2$

$\vdots$

$f_{s/2}$

FIG. 15 PRIOR ART

**EP 1 953 986 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007006493 A